Europäisches Patentamt

European Patent Office

Office européen des brevets

(19)

(11) Veröffentlichungsnummer: **0 243 481**
**B1**

(12) **EUROPÄISCHE PATENTSCHRIFT**

(45) Veröffentlichungstag der Patentschrift:
31.01.90

(51) Int. Cl.⁴: **G 01 N 15/08**

(21) Anmeldenummer: **86906807.2**

(22) Anmeldetag: **05.11.86**

(86) Internationale Anmeldenummer:
**PCT/EP 86/00638**

(87) Internationale Veröffentlichungsnummer:
**WO 87/03089 (21.05.87 Gazette 87/11)**

(54) **MESSKOPF FÜR DIE MESSUNG DER POROSITÄT EINER SICH BEWEGENDEN BAHN.**

(30) Priorität: **06.11.85 DE 3539320**

(43) Veröffentlichungstag der Anmeldung:
**04.11.87 Patentblatt 87/45**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
**US-A- 3 466 925**

(73) Patentinhaber: **Gessner & Co. GmbH, Postfach 1140,
D-8206 Bruckmühl/Mangfall 1 (DE)**

(72) Erfinder: **SCHUSTER, Hans, Karl, Pfarrweg 7,
D-8206 Bruckmühl (DE)**
Erfinder: **HEINS, Jens-Peter, Eichendorffstrasse 11,
D-8152 Feldkirchen-Westerham (DE)**
Erfinder: **GOCKEL, Bernhard,
Kerschensteinerstrasse 52, D-8034 Germering (DE)**
Erfinder: **SCHMIDT, Holger, Scharfreiterplatz 43,
D-8000 München 90 (DE)**

(74) Vertreter: **Hoffmann, Klaus, Dr. rer. nat. et al, Hoffmann .
Eitle & Partner Patentanwälte
Postfach 81 04 20 Arabellastrasse 4,
D-8000 München 81 (DE)**

## Beschreibung

Die Erfindung betrifft einen Meßkopf für die Messung der Porosität einer sich bewegenden Bahn aus porösem Material, mit einer Meßkammer, in der Unterdruck herrscht, einer diese Meßkammer abdeckenden Meßplatte, über welche die Bahn bewegt wird, in dieser Meßplatte vorgesehenen Meßöffnungen, über die Luft durch die poröse Bahn hindurch angesaugt wird, einem Meßluftstutzen, durch den die angesaugte Luft aus der Meßkammer abgesaugt wird, und mit einer rings um die Meßplatte angeordneten Vorrichtung zum Ansaugen der Bahn auf den Rand der Meßplatte.

Ein derartiger Meßkopf wird bei der Porositätsmessung an der laufenden Bahn eingesetzt. Insbesondere bei Papieren, beispielsweise Filterpapieren, und Gewebematerialien, ist die Porosität ein wichtiger Qualitätsparameter. Seine laufende Überwachung mittels eines One-Line-Meßverfahrens, beispielsweise zur Überwachung und Steuerung des Herstellungsprozesses, ist deshalb von besonderer Bedeutung. Für eine einwandfreie Porositätsmessung muß der obere Rand der Meßkammer seitlich gegenüber der darüber bewegten Bahn möglichst luftdicht abgeschlossen werden, so daß ausschließlich durch die poröse Bahn selbst angesaugte Luft in die Meßkammer gelangt. Hierzu muß die über den Meßkopf gleitende Bahn auf den Rand der Meßplatte gedrückt werden.

Bei dem durch die US-A-3 466 925 bekannt gewordenen Meßkopf zur Porositätsmessung sind rings um die in der Meßplatte vorgesehenen Meßöffnungen zusätzliche Löcher in mehreren konzentrischen Ringen angeordnet, durch welche spezielle Saugluft gesaugt wird. Die über den Meßkopf bewegte Bahn wird so auf den Rand der Meßplatte angesaugt. Zur Erzielung einer einwandfreien Abdichtung zwischen der bewegten Bahn und dem feststehenden Meßkopf sind erhebliche Saugdrücke erforderlich. Die meist gerade erst hergestellte poröse Bahn wird deshalb mit relativ hohem Flächendruck auf den Rand der Meßplatte gedrückt und schleift über den Meßkopf hinweg. Dabei besteht die große Gefahr, daß sich Fasern aus dem noch nicht vollständig gefestigten Gewebegefüge lösen und entweder an der Bahn selbst haften bleiben und die Qualität der fertigen Bahn vermindern oder aber infolge des Meßvakuums in die Meßkammer gelangen und dort zu Verstopfungen führen, wodurch die Porositätsmessung empfindlich gestört wird.

Es ist deshalb Aufgabe vorliegender Erfindung, einen Meßkopf der eingangs erwähnten Art so zu verbessern, daß die geschilderten Nachteile vermieden werden, insbesondere die über die Meßplatte bewegte Bahn möglichst wenig beansprucht wird, eine verbesserte Abdichtung zwischen Meßkammer und Bahn erreicht und so eine höhere Meßgenauigkeit erzielt wird.

Bei der Lösung dieser Aufgabe wird von einem Meßkopf gemäß dem Oberbegriff des ersten Patentanspruchs ausgegangen, und gelöst wird die Aufgabe dadurch, daß die Vorrichtung zum Ansaugen der Bahn einen umlaufenden Blasschlitz mit tangential zur Unterseite der Bahn nach außen gerichteter Ausblasöffnung aufweist.

Beim erfindungsgemäßen Meßkopf wird anstelle der bei herkömmlichen Meßköpfen eingesetzten Saugluft tangential gegen die Unterseite der bewegten Bahn geblasene Blasluft zum Ansaugen der Bahn auf den Rand der Meßplatte benutzt. Die auf diese Weise zwischen der Unterseite der Bahn und dem äußeren Rand des Meßkopfs strömende Luft erzeugt einen Unterdruck, der die Bahn auf den Rand der Meßplatte saugt und somit eine seitliche Abdichtung der Meßkammer bewirkt. Die poröse Bahn schleift dabei nicht über die Oberfläche des Meßkopfs, sondern gleitet auf einem ringförmigen, gleichzeitig als Dichtung dienenden Luftpolster über die Meßplatte. Die mechanische Beanspruchung der empfindlichen Bahn aus porösem Material ist deshalb wesentlich geringer als bei den bisher bekannten Meßköpfen. Ein zusätzlicher Vorteil besteht darin, daß eventuell lose an der Unterseite der Bahn haftende Fasern sowie Schmutzpartikel nicht in den Meßkopf gesaugt, sondern von der Oberfläche der Bahn abgeblasen werden. Das Innere des Meßkopfes und insbesondere die Meßkammer bleiben deshalb von Verschmutzung und Ablagerungen weitgehend frei. Da die bewegte Bahn vor dem Erreichen der eigentlichen Meßöffnungen eine Unterdruckzone passiert, findet eine Vorevakuierung der Hohlräume im porösen Material statt, wodurch eine Meßverfälschung infolge mitgerissener, in die Meßkammer gelangender Luft verhindert wird. Der erfindungsgemäße Meßkopf erlaubt daher auch eine Steigerung der Genauigkeit der Porositätsmessung.

Zweckmäßigerweise verjüngt sich der Blasschlitz zur Ausblasöffnung hin, um eine für den Aufbau eines hinreichenden Unterdrucks genügend hohe Austrittsgeschwindigkeit der Blasluft zu erreichen.

Bei einer bevorzugten Ausführung des erfindungsgemäßen Meßkopfs dient ein die Meßkammer umgebender Ringkanal, der in den umlaufenden Blasschlitz übergeht, zur gleichmäßigen Versorgung des Blasschlitzes mit Blasluft, welche über wenigstens einen, in diesen Ringkanal mündenden Anschlußstutzen von einem geeigneten Gebläse zugeführt wird.

Bei einer weiteren vorteilhaften Ausgestaltung der Erfindung ist die Meßplatte von einer Leitplatte umgeben, welche sich bis zur Ausblasöffnung erstreckt. Diese Leitplatte bewirkt eine Führung der bewegten Bahn in vertikaler Richtung, so daß die Leitplatte immer vollständig überstrichen wird. Zweckmäßigerweise liegen die Oberseiten von Meßplatte und Leitplatte bündig und bilden so eine gemeinsame ebene Fläche, über die die Bahn ungehindert gleiten kann. Eine leichte Abschrägung der Leitplatte an ihrem Umfang erleichtert der bewegten Bahn das Auflaufen auf den Meßkopf.

Bei einer bevorzugten Ausführung der Erfindung wird der Ringkanal zur Verteilung der Blasluft im wesentlichen von einem umlaufenden Blasring gebildet. Vorteilhaft besitzt dieser Blasring ungefähr kreisabschnittsförmigen Querschnitt und weist an seiner ebenen Unterseite eine halbkreisförmige Nut auf, welche den Ringkanal bildet. Die gerundete Kontur der Oberseite des Blasrings fördert die Ausbildung der den gewünschten Unterdruck erzeugenden Luftströmung an der Peripherie des Meßkopfs. Eine besonders ruhige, ebene Luftströmung bildet sich aus, wenn der Blasring an seiner Oberseite eine ebene, parallel zur Bahn liegende Abplattung aufweist.

Besonders bevorzugt wird eine Ausführungsform, bei der der Blasschlitz von der Unterseite der Leitplatte und der Oberseite des Blasrings gebildet wird. Zweckmäßigerweise überdeckt dabei die Leitplatte den Blasring etwa zur Hälfte. Ist darüber hinaus der Blasring vertikal verschiebbar montiert, läßt sich auf einfache Weise die Dicke des Blasschlitzes durch Änderung des Abstands zwischen Blasring und Leitplatte einstellen. Bei einem so ausgebildeten Meßkopf läßt sich die Kraft, mit der die bewegte Bahn angesaugt wird, unterschiedlichen Meßbedingungen und Bahnmaterialien leicht anpassen.

In zweckmäßiger Weiterbildung des erfindungsgemäßen Meßkopfs sind Meßplatte, Leitplatte und Blasring an eine gemeinsame, die Meßkammer umgebende Trägerplatte montiert. Es sind jedoch auch andere konstruktive Lösungen denkbar, bei denen beispielsweise Meßplatte und Leitplatte einstückig ausgebildet sind. Ist zwischen der Trägerplatte und dem aufmontierten Blasring ein elastischer Dichtring vorgesehen, läßt sich der Abstand zwischen Blasring und Leitplatte und damit die Dicke des Blasschlitzes durch mehr oder weniger starkes Anziehen der Verbindungselemente bewerkstelligen, wobei der Dichtring elastisch nachgibt.

Bei einer vorteilhaften Weiterbildung der Erfindung ist an der Oberseite des Meßkopfes zwischen den Meßöffnungen und der Ausblasöffnung ein zusätzlicher Ring-Meßkanal vorgesehen, mittels dessen sich der direkt an der Unterseite der Bahn herrschende Unterdruck messen läßt. Eine Unterdruckmessung an dieser Stelle ist Voraussetzung für eine Regelung der Menge der aus der Ausblasöffnung strömenden Blasluft derart, daß der hierdurch auf die Bahnunterseite einwirkende Unterdruck etwa dem in der Meßkammer herrschenden Unterdruck entspricht. Ein Druckgefälle längs der Bahn im Bereich des Meßplattenrandes kann dann nicht auftreten, wodurch Meßverfälschungen infolge schräg oder gar seitlich durch die poröse Bahn strömender Meßluft vermieden werden.

Besonders bevorzugt wird eine kreisrunde Ausgestaltung des erfindungsgemäßen Meßkopfs, so daß der Blasschlitz die Meßplatte konzentrisch umgibt. Die rotationssymmetrische Ausbildung des Meßkopfs zeichnet sich durch besonders gute aerodynamische Eigenschaften aus und ist einfach und damit kostengünstig herzustellen.

Ausführungsbeispiele der Erfindung werden nachstehend anhand der beigefügten Zeichnungen erläutert. Es zeigen:

Fig. 1 einen Meßkopf mit zentralem Meßluftstutzen;

Fig. 2 eine zweite Ausführungsform des erfindungsgemäßen Meßkopfs mit ringförmig ausgebildetem Meßluftstutzen und in der Meßkammer angeordnetem, ebenfalls ringförmigem Filter;

Fig. 3 eine dritte Ausführungsform des erfindungsgemäßen Meßkopfs mit ringförmig ausgebildetem Meßluftstutzen und einem in der Meßkammer angeordneten Filter in Form eines Hohlzylinders;

Fig. 4 eine vierte Ausführungsform des erfindungsgemäßen Meßkopfs mit zentralem Meßluftstutzen und diesen abdeckendem, axial angeordnetem Filter;

Fig. 5 eine weitere Ausführungsform des erfindungsgemäßen Meßkopfs mit ringförmig ausgebildetem Meßluftstutzen, ringförmigem Filter und zusätzlichem Absaugstutzen zum Anschluß eines Staubsaugers.

In sämtlichen Figuren ist jeweils nur eine Hälfte des rotationssymmetrischen Meßkopfs in einem Vertikalschnitt dargestellt.

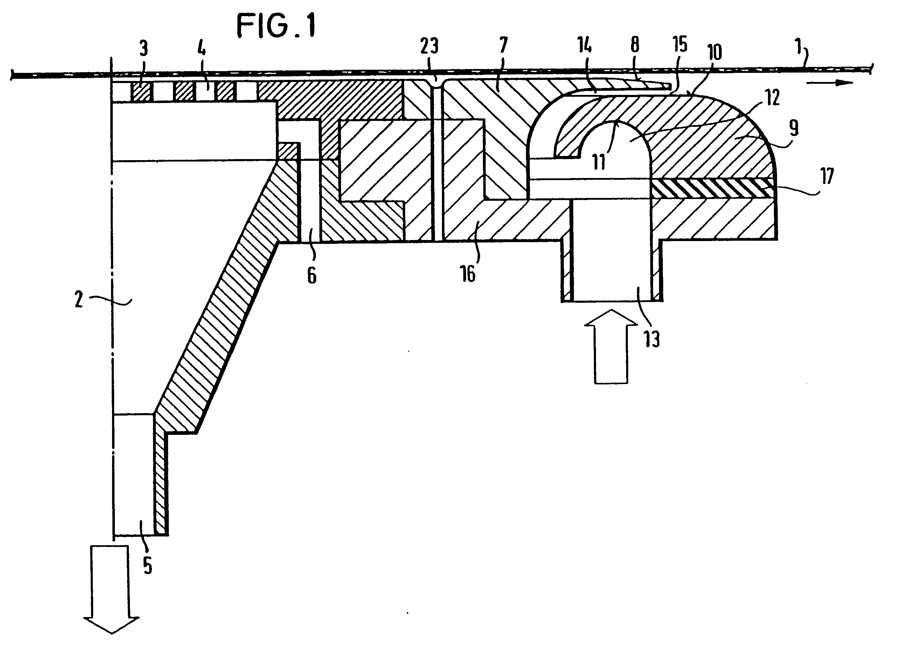

Gemäß Fig. 1 wird die Bahn aus porösem Material, deren Porosität gemessen werden soll, in der durch einen Pfeil angedeuteten Richtung über die Oberseite des Meßkopfs bewegt. Die Meßkammer 2 wird nach oben hin von einer Meßplatte 3 abgedeckt, in der Meßöffnungen 4 vorgesehen sind. Die Meßkammer 2 mündet unten in einen zentralen Meßluftstutzen 5, an den eine nicht dargestellte Einrichtung zur Erzeugung eines Unterdrucks angeschlossen ist. Während des Meßvorgangs wird Luft durch die poröse Bahn 1 und die Meßöffnungen 4 in die Meßkammer 2 angesaugt. Die Menge der angesaugten Luft, welche mit einer geeigneten Meßeinrichtung gemessen wird, ist ein Maß für die Porosität der Bahn 1. Der in der Meßkammer 2 herrschende Unterdruck, der während der Messung möglichst konstant gehalten wird, kann über einen getrennten Meßkanal 6 separat gemessen werden. Die runde Meßplatte 3 ist von einer ebenfalls runden Leitplatte 7 umgeben. Die Oberseiten der Meßplatte 3 und der Leitplatte 7 liegen bündig, so daß sie eine gemeinsame ebene Fläche bilden, über die die Bahn 1 gleitet. An ihrem äußeren Umfang weist die Leitplatte 7 eine leichte Abschrägung 8 auf. Die Leitplatte 7 überdeckt teilweise einen Blasring 9 von ungefähr kreisabschnittsförmigem Querschnitt und einer ebenen, parallel zur Bahn 1 liegenden Abplattung 10 an seiner Oberseite. An seiner ebenen Unterseite weist der Blasring 9 eine halbkreisförmige Nut 11 auf, welche einen die Meßkammer 2 konzentrisch umgebenden Ringkanal 12 bildet. Während des Meßbetriebs wird über einen Anschlußstutzen 13 Blasluft in den Ringkanal 12 eingeleitet. Der Ringkanal 12 geht in einen rings um die Meßplatte 3 umlaufenden Blasschlitz 14 über, welcher von der gekrümmten Unterseite der Leitplatte 7 und der gegenüberstehenden Oberseite des Blasrings 9 gebildet wird. Die Ausblasöffnung 15 dieses Blasschlitzes 14 ist tangential zur Unterseite der bewegten Bahn 1 nach außen gerichtet. Die durch sie ausströmende Blasluft erzeugt zwischen der Unterseite der Bahn 1 und der kreisförmig gewölbten Außenkontur des Blasrings 9 einen Unterdruck, wodurch die Bahn 1 auf den Rand der Leitplatte 7 gedrückt wird. Eventuell an der Unterseite der Bahn 1 anhaftende Partikel werden dabei nach außen weggeblasen. Die stetige Verjüngung des Blasschlitzes 14 zur Ausblasöffnung 15 hin bewirkt eine genügend hohe Ausblasgeschwindigkeit der strömenden Blasluft. Die Meßplatte 3, die Leitplatte 7 und der Blasring 9 sind gemeinsam auf eine runde Trägerplatte 16 montiert. Zwischen dieser Trägerplatte 16 und dem Blasring 9 ist ein elastischer Dichtring 17 vorgesehen. Der Blasring 9 ist dabei vertikal so verschiebbar montiert, daß die Dicke des Blasschlitzes 14 durch eine Änderung des Abstands zwischen Blasring 9 und Leitplatte 7 einstellbar ist, wobei der Dichtring 17 elastisch nachgeben kann.

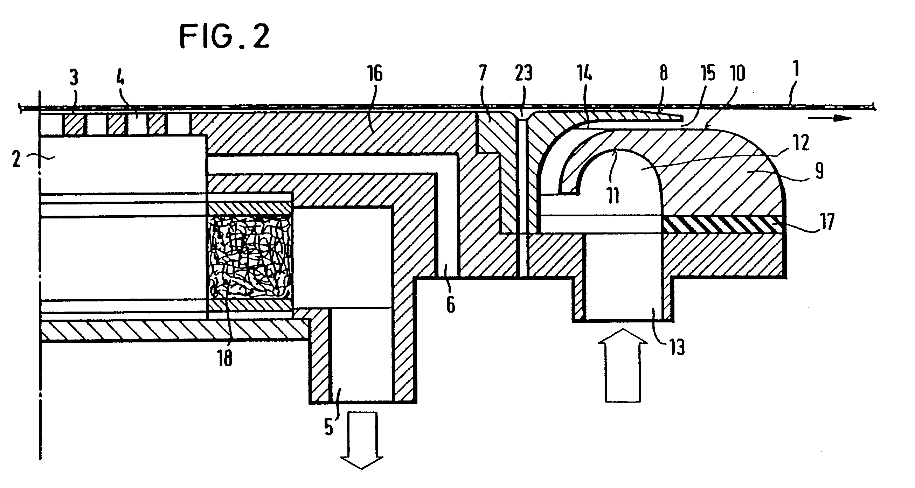

Die Meßkammer 2 des in Fig. 2 dargestellten zweiten Ausführungsbeispiels des erfindungsgemäßen Meßkopfs zeichnet sich durch einen vergrößerten Durchmesser bei gleichzeitig verringerter Höhe aus. Der Meßluftstutzen 5 ist ringförmig ausgebildet und läuft am unteren Rand der Meßkammer 2 um. Die Meßplatte 3 ist an die Trägerplatte 16 einstückig angeformt. Hierdurch ergibt sich eine insgesamt niedrigere Bauhöhe des Meßkopfs. In der Meßkammer 2 ist ein kreisringförmig ausgebildetes Filter 18 vorgesehen, welches zwischen den Meßöffnungen 4 und dem Meßluftstutzen 5 angeordnet ist. Es dient zur Filterung der durch die Meßkammer 2 strömenden Meßluft, um das empfindliche, an den Meßluftstutzen 5 angeschlossene Meßsystem vor Staub- und Schmutzpartikeln zu schützen.

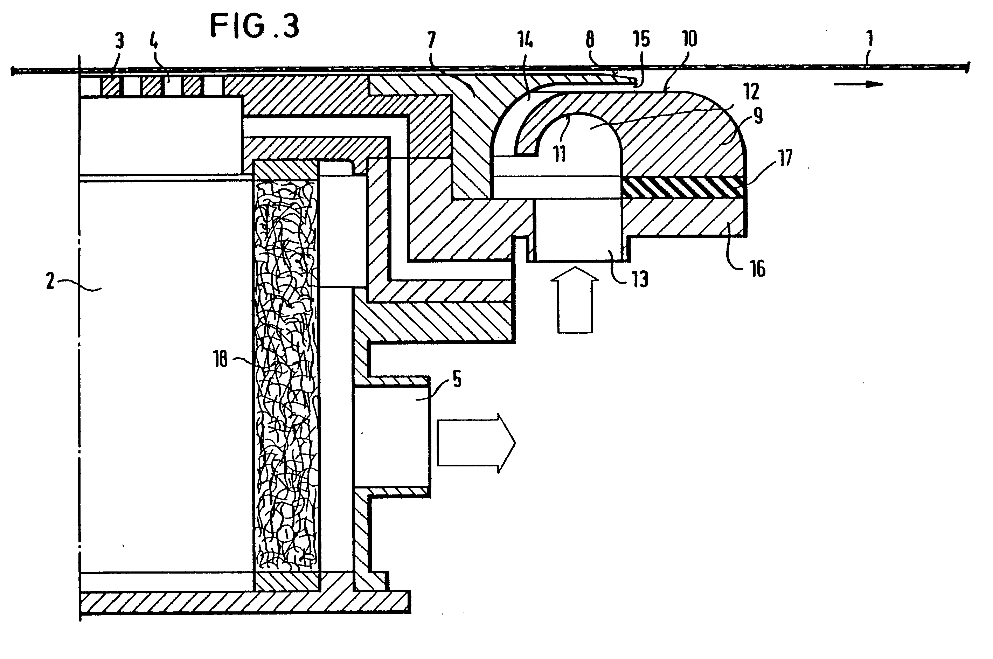

Fig. 3 zeigt eine Ausführung des erfindungsgemäßen Meßkopfs, die sich durch ein wesentlich vergrößertes, vor dem ringförmigen Meßluftstutzen 5 angeordnetes Filter 18 in Form eines Hohlzylinders auszeichnet.

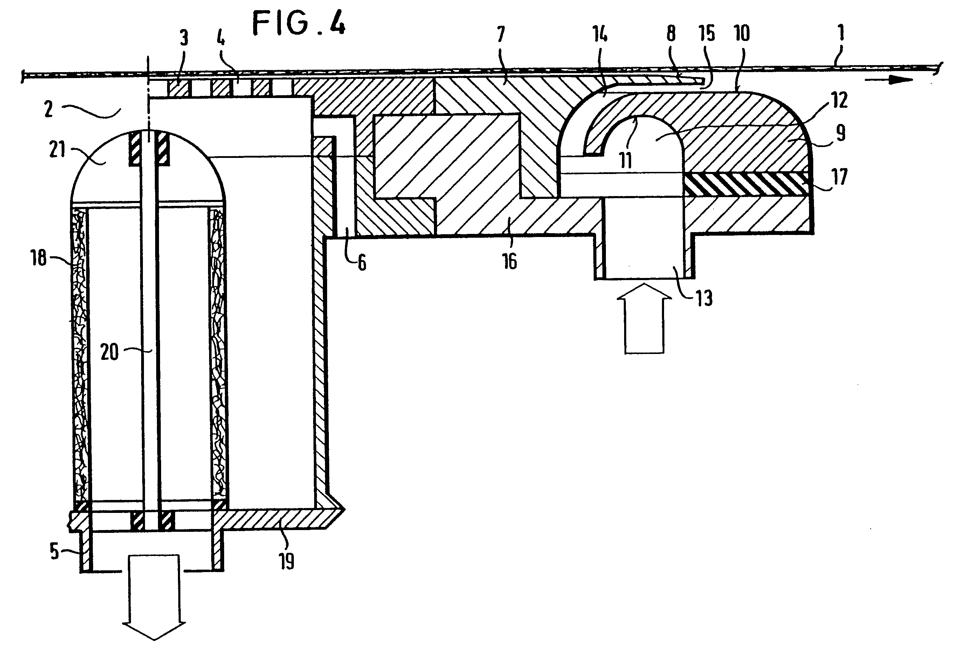

Fig. 4 zeigt eine weitere Ausführungsform des Meßkopfs. Die Meßkammer 2 ist nach unten hin durch einen Deckel 19 abgeschlossen, in den ein zentraler Meßluftstutzen 5 mit ringkreisförmiger Auslaßöffnung eingelassen ist. Das zylindrisch ausgebildete Filter 18 deckt den Meßluftstutzen 5 vollständig ab. Auf der Innenseite des Deckels 19 ist das Filter 18 mittels einer zentralen Haltestange 20 und einer Befestigungskappe 21 lösbar montiert, so daß es leicht ausgetauscht werden kann.

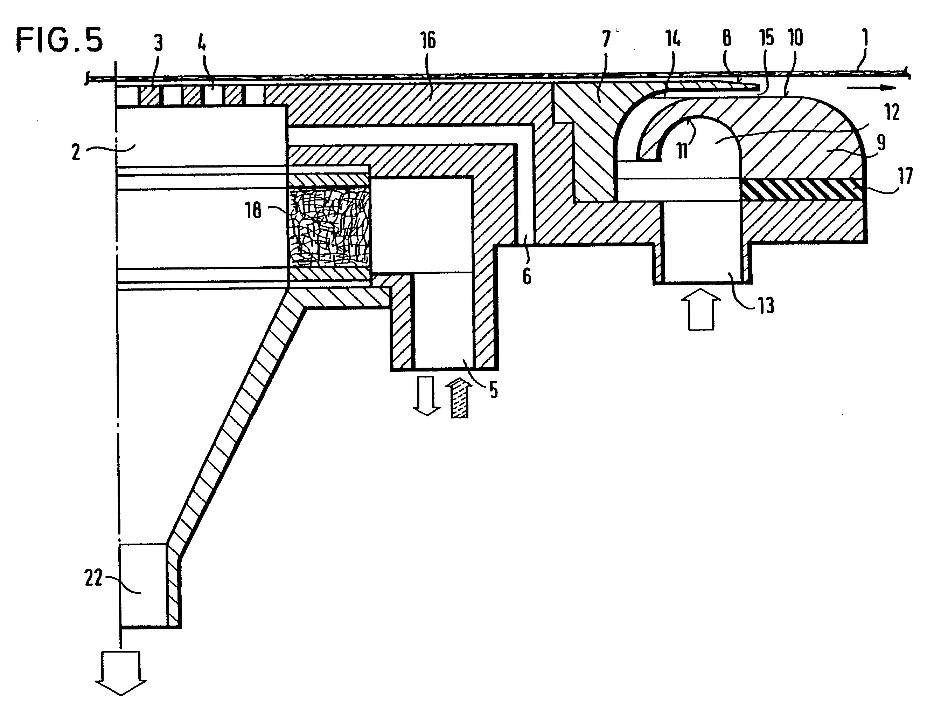

Bei dem in Fig. 5 dargestellten Meßkopf ist an der der Meßplatte 3 gegenüberliegenden Seite der Meßkammer 2 ein zusätzlicher Absaugstutzen 22 zum Anschluß eines (nicht dargestellten) Staubsaugers vorgesehen. Das Filter 18 befindet sich zwischen diesem Absaugstutzen 22 und dem ringförmig umlaufenden Meßluftstutzen 5. Zur Reinigung des Filters 18 und der Meßkammer 2 wird Spülluft über den Meßluftstutzen 5 entgegen der Strömungsrichtung beim Meßbetrieb durch das Filter 18 in die Meßkammer 2 eingeleitet und über den Absaugstutzen 22 abgesaugt. Wird die Menge der eingeleiteten Spülluft dabei so dosiert, daß sie die durch den Absaugstutzen 22 abgesaugte Luftmenge nicht übersteigt, ist gewährleistet, daß die Meßöffnungen 4 in der Meßplatte 3 stets von außen nach innen und nie umgekehrt durchströmt werden, so daß sich kein Schmutz oder Staub auf der Innenseite der Meßplatte 3 ablagern kann.

## Patentansprüche

1. Meßkopf für die Messung der Porosität einer sich bewegenden Bahn (1) aus porösem Material, mit
— einer Meßkammer (2), in der Unterdruck herrscht,
— einer diese Meßkammer abdeckenden Meßplatte (3), über welche die Bahn (1) bewegt wird,
— in dieser Meßplatte vorgesehenen Meßöffnungen (4), über die Luft durch die poröse Bahn hindurch angesaugt wird,

— einem Meßluftstutzen (5), durch den die angesaugte Luft aus der Meßkammer (2) abgesaugt wird,
— und einer rings um die Meßplatte (3) angeordneten Vorrichtung zum Ansaugen der Bahn (1) auf den Rand der Meßplatte,
dadurch gekennzeichnet, daß die Vorrichtung zum Ansaugen der Bahn (1) einen umlaufenden Blasschlitz (14) mit tangential zur Unterseite der Bahn (1) nach außen gerichteter Ausblasöffnung (15) aufweist.

2. Meßkopf nach Anspruch 1, dadurch gekennzeichnet, daß sich der Blasschlitz (14) zur Ausblasöffnung (15) hin stetig verjüngt.

3. Meßkopf nach Anspruch 1 oder 2, dadurch gekennzeichnet, daß zur gleichmäßigen Versorgung des Blasschlitzes (14) mit Blasluft ein die Meßkammer (2) umgebender Ringkanal (12) vorgesehen ist, der in den umlaufenden Blasschlitz (14) übergeht.

4. Meßkopf nach Anspruch 3, dadurch gekennzeichnet, daß wenigstens ein Anschlußstutzen (13) für Blasluft vorgesehen ist, der in den Ringkanal (12) mündet.

5. Meßkopf nach einem der Ansprüche 1 bis 4, dadurch gekennzeichnet, daß die Meßplatte (3) von einer Leitplatte (7) umgeben ist, welche sich bis zur Ausblasöffnung (15) erstreckt.

6. Meßkopf nach Anspruch 5, dadurch gekennzeichnet, daß die Oberseiten von Meßplatte (3) und Leitplatte (7) bündig liegen und so eine gemeinsame ebene Fläche bilden, über die die Bahn (1) gleitet.

7. Meßkopf nach Anspruch 5 oder 6, dadurch gekennzeichnet, daß die Leitplatte (7) an ihrem Umfang eine leichte Abschrägung (8) aufweist.

8. Meßkopf nach einem der Ansprüche 3 bis 7, dadurch gekennzeichnet, daß der Ringkanal (12) im wesentlichen von einem Blasring (9) gebildet wird.

9. Meßkopf nach Anspruch 8, dadurch gekennzeichnet, daß der Blasring (9) ungefähr kreisabschnittsförmigen Querschnitt besitzt und an seiner ebenen Unterseite eine halbkreisförmige Nut (11) aufweist, welche den Ringkanal (12) bildet.

10. Meßkanal nach Anspruch 9, dadurch gekennzeichnet, daß der Blasring (9) an seiner Oberseite eine ebene, parallel zur Bahn (1) liegende Abplattung (10) aufweist.

11. Meßkanal nach einem der Ansprüche 5 bis 7 und einem der Ansprüche 8 bis 10, dadurch gekennzeichnet, daß der Blasschlitz (14) von der Unterseite der Leitplatte (7) und der Oberseite des Blasrings (9) gebildet wird.

12. Meßkopf nach Anspruch 11, dadurch gekennzeichnet, daß die Leitplatte (7) den Blasring (9) etwa zur Hälfte überdeckt.

13. Meßkopf nach Anspruch 11 oder 12, dadurch gekennzeichnet, daß der Blasring (9) vertikal verschiebbar montiert ist, so daß die Dicke des Blasschlitzes (14) durch Änderung des Abstands zwischen Blasring (9) und Leitplatte (7) einstellbar ist.

14. Meßkopf nach einem der Ansprüche 3 bis 13, dadurch gekennzeichnet, daß Meßplatte (3), Leitplatte (7) und Blasring (9) an eine gemeinsame, die Meßkammer (2) umgebende Trägerplatte (16) montiert sind.

15. Meßkopf nach Anspruch 14, dadurch gekennzeichnet, daß zwischen der Trägerplatte (16) und dem aufmontierten Blasring (9) ein elastischer Dichtring (17) vorgesehen ist.

16. Meßkopf nach einem der Ansprüche 1 bis 15, dadurch gekennzeichnet, daß an seiner Oberseite zwischen den Meßöffnungen (4) und der Ausblasöffnung (15) ein Ring-Meßkanal (23) zur Messung des an der Unterseite der Bahn (1) herrschenden Unterdrucks vorgesehen ist.

17. Meßkopf nach einem der Ansprüche 1 bis 16, dadurch gekennzeichnet, daß er kreisrund ist, so daß der Blasschlitz (14) die Meßplatte (3) konzentrisch umgibt.

## Claims

1. A measuring head for measuring the porosity of a moving strip (1) of porous material comprising:
— a measuring chamber (2) in which reduced pressure is present;
— a measuring plate (3) closing this measuring chamber across which plate the strip is moved;
— measuring openings (4) provided in said measuring plate via which the air is sucked through the porous strip;
— a measuring air connector (5), through which the intake air can be sucked out of the measuring chamber (2); and
— a device arranged around the measuring plate (3) for sucking the strip onto the edge of the measuring plate,
characterised in that the device for sucking the strip (1) comprises a surrounding blowing slot (14) having an outwardly directed blow opening (15) tangential to the lower surface of the strip (1).

2. A measuring head according to claim 1, characterised in that the blowing slot (4) continuously tapers towards the blow opening (15).

3. A measuring head according to claim 1 or 2 characterised in that for uniform supply of the blowing slot (14) with blowing air, an annular channel (12) is provided which surrounds the measuring chamber (2) and merges into the surrounding blowing slot (14).

4. A measuring head according to claim 3, characterised in that at least one connection member (13) is provided for blowing air, and discharges into the annular channel (12).

5. A measuring head according to any of claims 1 to 4 characterised in that the measuring plate (3) is surrounded by a guide plate (7) which extends to the blow opening (15).

6. A measuring head according to claim 5, characterised in that the upper surfaces of the measuring plate (3) and the guide plate (7) abut and thus form a common flat surface across which the strip slides.

7. A measuring head according to claim 5 or 6 characterised in that the guide plate (7) has a slight incline (8) on its periphery.

8. A measuring head according to any of claims 3 to 7 characterised in that the annular channel (12) is formed substantially by a blowing ring (9).

9. A measuring head according to claim 8, characterised in that the blowing ring (7) has approximately a part circular cross-section, and has on its flat lower surface a semi-circular groove (11) which forms the annular channel (12).

10. A measuring head according to claim 9, characterised in that the blowing ring (9) has on its upper surface a plane flattended region (10) lying parallel to the stripe (1).

11. A measuring head according to any of claims 5 to 7 and any of claims 8 to 10 characterised in that the blowing slot (14) is formed by the lower surface of the guide plate (7) and the upper surface of the blowing ring (9).

12. A measuring head according to claim 11, characterised in that the guide plate (7) overlaps approximately half of the blowing ring (9).

13. A measuring head according to claim 11 or 12 characterised in that the blowing ring (9) is mounted for vertical displacement so that the thickness of the blowing slot (14) is adjustable by change of the spacing between the blowing ring (9) and the guide plate (7).

14. A measuring head according to any of claims 3 to 13 characterised in that the measuring plate (3), guide plate (7) and blowing ring (9) are mounted on a common carrier plate (16) surrounding the measuring chamber (2).

15. A measuring head according to claim 14, characterised in that between the carrier plate (16) and the blowing ring (9) mounted thereon is provided an elastic sealing ring (17).

16. A measuring head according to any of claims 1 to 15 characterised in that its upper surface between the measuring openings (4) and the blow opening (15) is provided an annular measuring channel (23) for measuring the reduced pressure occurring on the lower surface of the strip (1).

17. A measuring head according to any of claims 1 to 16 characterised in that it is circular so that the blowing slot (14) concentrically surrounds the measuring plate (3).

## Revendications

1. Tête de mesure pour déterminer la porosité d'une bande (1) en matériau poreux, en cours de déplacement, comprenant:
— une chambre de mesure (2) dans laquelle règne une dépression,
— une plaque de mesure (3) recouvrant cette chambre de mesure et sur laquelle est déplacée la bande (1),
— des orifices de mesure (4) prévus dans cette plaque de mesure et par l'intermédiaire desquels l'air est aspiré à travers la bande poreuse,
— une tubulure d'air de mesure (5), à travers laquelle l'air aspiré à partir de la chambre de mesure (2) est évacué,
— et un dispositif disposé tout autour de la plaque de mesure (3), dans le but d'attirer par aspiration la bande sur le bord de la plaque de mesure,
caractérisé en ce que le dispositif d'attraction par aspiration de la bande (1) présente une fente de soufflage circulaire (14) comportant un orifice d'échappement (15) orienté vers l'extérieur, tangentiellement à la face inférieure de la bande (1).

2. Tête de mesure selon la revendication 1, caractérisée en ce que la fente de soufflage (14) s'effile constamment en allant vers l'orifice d'échappement (15).

3. Tête de mesure selon la revendication 1 ou 2, caractérisée en ce que, dans le but de réaliser une alimentation régulière en air de soufflage de la fente de soufflage (14), il est prévu un canal annulaire (12) entourant la chambre de mesure (2) et se transformant en ladite fente de soufflage circulaire (14).

4. Tête de mesure selon la revendication 3, caractérisée en ce qu'il est prévu au moins une tubulure de raccordement (13) pour l'air de soufflage, tubulure débouchant dans le canal annulaire (12).

5. Tête de mesure selon l'une des revendications 1 à 4, caractérisée en ce que la plaque de mesure (3) est entourée d'une plaque de guidage (7) qui s'étend jusqu'à l'orifice d'échappement (15).

6. Tête de mesure selon la revendication 5, caractérisée en ce que les faces supérieures de la plaque de mesure (3) et de la plaque de guidage (7) sont affleurées et forment ainsi une surface plane commune sur laquelle glisse la bande (1).

7. Tête de mesure selon la revendication 5 ou 6, caractérisée en ce que la plaque de guidage (7) présente à sa périphérie un léger chanfrein (8).

8. Tête de mesure selon l'une des revendications 3 à 7, caractérisée en ce que le canal annulaire (12) est essentiellement formé d'une bague de soufflage (9).

9. Tête de mesure selon la revendication 8, caractérisée en ce que la bague de soufflage (9) présente une section transversale à peu près en forme de segment de cercle et présente sur sa face inférieure plane une gorge (11) en forme de demi-cercle qui forme le canal annulaire (12).

10. Tête de mesure selon la revendication 9, caractérisée en ce que la bague de soufflage (9) présente sur sa face supérieure un aplatissement plan (10) situé parallèlement à la bande (1).

11. Tête de mesure selon l'une des revendications 5 à 7, caractérisée en ce que la fente de soufflage (14) est formée par la face inférieure de la plaque de guidage (7) et par la face supérieure de la bague de soufflage (9).

12. Tête de mesure selon la revendication 11, caractérisée en ce que la plaque de guidage (7) recouvre la bague de guidage (9) à peu près à sa moitié.

13. Tête de mesure selon la revendication 11 ou 12, caractérisée en ce que la bague de soufflage (9) est montée mobile verticalement, de façon que l'épaisseur de la fente de soufflage (14) soit réglable par modification de la distance entre bague de soufflage (9) et plaque de guidage (7).

14. Tête de mesure selon l'une des revendications 3 à 13, caractérisée en ce que la plaque de mesure (3), la plaque de guidage (7) et la bague de soufflage (9) sont montées sur une plaque support (16) commune, entourant la chambre de mesure (2).

15. Tête de mesure selon la revendication 14, caractérisée en ce qu'une bague d'étanchéité (17) élastique est prévue entre la plaque support (16) et la bague de soufflage (9) montée sur cette dernière.

16. Tête de mesure selon l'une des revendications 1 à 15, caractérisée en ce qu'un canal de mesure annulaire (23) destiné à la mesure de la dépression régnant sur la face inférieure de la bande (1) est prévu sur la face supérieure de la tête de mesure, entre les orifices de mesure (4) et l'orifice d'échappement (15).

17. Tête de mesure selon l'une des revendications 1 à 16, caractérisée en ce qu'elle est circulaire, de façon à ce que la fente de soufflage (14) entoure concentriquement la plaque de mesure (3).

# FIG.1

EP 0 243 481 B1

FIG.2

EP 0 243 481 B1

FIG.3

# FIG.4

EP 0 243 481 B1

FIG.5

EP 0 243 481 B1